# EUROPEAN PATENT APPLICATION

(11) **EP 4 611 106 A1**
(43) Date of publication of application: **03.09.2025**
(21) Application number: 23883071.5
(22) Date of filing: 24.10.2023
(51) Int. Cl.: H01M 10/0587, H01M 10/04, H01M 10/42

(54) **ELECTRODE ASSEMBLY FOR SECONDARY BATTERY AND CYLINDRICAL SECONDARY BATTERY INCLUDING SAME**

(30) Priority: 28.10.2022 KR 20220141905; 20.10.2023 KR 20230141161
(71) Applicant: LG Energy Solution, Ltd., Seoul 07335 (KR)
(72) Inventor: NOH, Soo Dong, Daejeon 34122 (KR)
(74) Representative: Goddar, Heinz J.
(86) International application number: PCT/KR2023/016586
(87) International publication number: WO 2024/090966

(57) **Abstract**

The present invention relates to an electrode assembly for a secondary battery, the electrode assembly having a shape in which an electrode stack, which includes: a positive electrode including a positive electrode current collector and a positive electrode active material layer disposed on at least one surface of the positive electrode current collector; a negative electrode including a negative electrode current collector and a negative electrode active material layer disposed on at least one surface of the negative electrode current collector; and a separator interposed between the positive electrode and the negative electrode, is wound, wherein an end, which faces a winding center, of both ends in a longitudinal direction of the negative electrode is a negative electrode non-coating portion on which the negative electrode active material layer is not disposed, and an end, which faces the winding center, of both ends in a longitudinal direction of the positive electrode is disposed with a ceramic-containing film member.

## Description

### TECHNICAL FIELD

This application claims priority from Korean Patent Application Nos. 10-2022-0141905, filed on October 28, 2022, and 10-2023-0141161, filed on October 20, 2023, the disclosures of which are incorporated herein.

The present invention relates to an electrode assembly for a secondary battery, which is capable of preventing internal short-circuit caused by damage to a separator, and a cylindrical type secondary battery including the electrode assembly for the secondary battery.

### BACKGROUND ART

According to the shape of a battery case, secondary batteries may be classified into a cylindrical type battery and a prismatic type battery, each of which has an electrode assembly embedded in a cylindrical or prismatic metal can, and a pouch type battery having an electrode assembly embedded in a pouch type case made of an aluminum laminate sheet.

In addition, the electrode assembly embedded in the battery case is a chargeable and dischargeable power generation device having a structure in which a positive electrode/a separator/a negative electrode are stacked, and may be classified into an electrode assembly having a jelly-roll-type structure in which long sheet-type positive and negative electrodes, each of which is coated with an active material, are wound by interposing a separator therebetween, an electrode assembly having a stack type structure in which a plurality of positive and negative electrodes, each of which has a predetermined size, are stacked in sequence with a separator interposed therebetween, and a stack and folding type electrode assembly having a structure in which bi-cells or full-cells, in which positive and negative electrodes in a predetermined unit are stacked with a separator interposed therebetween, are wound.

Among these electrode assemblies, the jelly-roll-type electrode assembly has advantages such as easiness in manufacture and a high energy density per weight, and thus, are widely manufactured. The jelly-roll-type electrode assembly may be manufactured by assembling a stack of the long sheet-type positive and negative electrodes and the separator interposed therebetween, and winding the stack in a longitudinal direction of the sheet in a state in which a core is in contact with one end of the stack of the electrodes.

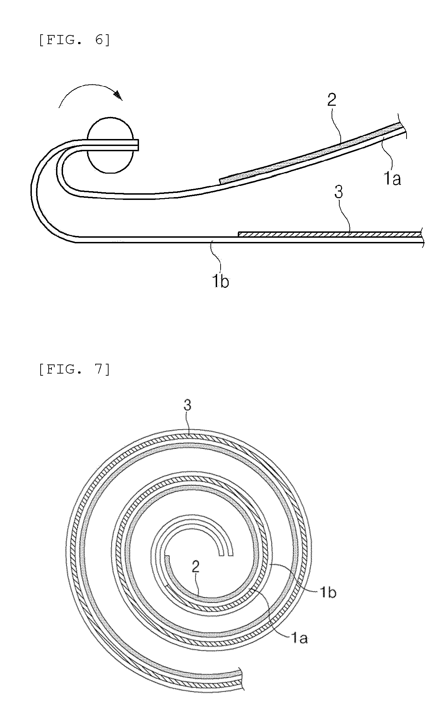

Specifically, as illustrated in FIG. 6, in a state in which separators 1a and 1b are first input in a core and fixed to overlap each other, while the core rotates, a negative electrode 2 is input, and then a positive electrode 3 is input at a predetermined time interval. When the core rotates at a predetermined revolution in a state in which even the positive electrode 3 is input, a jelly-roll shape is achieved as illustrated in FIG. 7. That is, the separators 1a and 1b, the negative electrode 2, and the positive electrode 3 are arranged outward from a center of the jelly-roll shape. Although FIG. 7 illustrates a space that exists in the inside while the negative electrode, the separators, and the positive electrode rotate, it is just intentionally illustrated with spacing for identification. Actually, while rotating, the negative electrode, the separators, and the positive electrode are in close contact with each other to be wound to have a densely packed cylindrical shape.

Meanwhile, the electrode may be deformed while being repeatedly expanded and contracted during a charging-discharging of the battery. In particular, as the jelly-roll-type electrode assembly has a densified shape, an internal temperature may increase when this deformation occurs. As above, when the electrode is deformed or the inner temperature excessively increases, the separator in the electrode assembly may be damaged, and accordingly there is a risk of occurrence of short-circuit between the positive electrode and the negative electrode. This may further increase the inner temperature of the electrode assembly to cause serious safety problems such as ignition or explosion. Thus, there is a need for solutions to resolve these safety problems.

### DISCLOSURE OF THE INVENTION

### TECHNICAL PROBLEM

An object of the present invention is to provide an electrode assembly for a secondary battery, in which a ceramic-containing film member is introduced to solve the above-described safety problems, and a cylindrical type secondary battery.

### TECHNICAL SOLUTION

The present invention provides an electrode assembly for a secondary battery, the electrode assembly having a shape in which an electrode stack, which includes: a positive electrode including a positive electrode current collector and a positive electrode active material layer disposed on at least one surface of the positive electrode collector;
a negative electrode including a negative electrode current collector and a negative electrode active material layer disposed on at least one surface of the negative electrode collector; and
a separator interposed between the positive electrode and the negative electrode, is wound,
wherein an end, which faces a winding center, of both ends in a longitudinal direction of the negative electrode is a negative electrode non-coating portion on which the negative electrode active material layer is not disposed, and
an end, which faces the winding center, of both ends in a longitudinal direction of the positive electrode is disposed with a ceramic-containing film member.

The present invention also provides a cylindrical type secondary battery including: the electrode assembly for the secondary battery;
a battery can in which the electrode assembly is accommodated; and
a cap assembly that seals an opened end of the battery can.

### ADVANTAGEOUS EFFECTS

When the cylindrical type secondary battery is manufactured by including the electrode assembly for the secondary battery according to the present invention, the deformation of the electrode and the resulting damage to the separator may be prevented during the charging-discharging. Ultimately, the risk of the occurrence of the internal short-circuit may be reduced to improve the safety of the secondary battery.

### BRIEF DESCRIPTION OF THE DRAWINGS

FIG. 1 is a view illustrating an electrode stack according to an embodiment of the present invention.
FIG. 2 illustrates a view for comparison of a state of a winding center between a case (left) in which a ceramic-containing film member is not introduced, and a case (right) in which a ceramic-containing film member is introduced in a jelly-roll-type electrode assembly.
FIG. 3 is a view illustrating a ceramic-containing film member according to an embodiment of the present invention.
FIG. 4 is a view illustrating several suitable shapes for a cross-section of a portion A-A' of the ceramic-containing film member illustrated in FIG. 3.
FIG.5 is a view illustrating results obtained by measuring voltage variations over time in secondary batteries manufactured according to Example and Comparative Example.
FIG.6 is a view illustrating a process in which a separator, a negative electrode, and a positive electrode are input into a core when a jelly-roll-type electrode assembly is manufactured by a method according to the related art.
FIG.7 is a view illustrating a process in which a jelly-roll shape is achieved while the core rotates in a state in FIG. 6.
FIG. 8 is a vertical cross-sectional perspective view illustrating a cylindrical type secondary battery according to an embodiment of the present invention.
FIG. 9 is a view illustrating a structure of a cap assembly according to an embodiment of the present invention.

### [Description of the Symbols]

1, 1a, 1b: Separator
2: Negative electrode
21: Negative electrode non-coating portion
21a: Area of negative electrode non-coating portion
2a: Negative electrode current collector
2b: Negative electrode active material layer
3: Positive electrode
3a: Positive electrode current collector
3b: Positive electrode active material layer
31: Ceramic-containing film member
31a: Area disposed with ceramic-containing film member
50: Polymer film
51: Ceramic
10: Top cap
20: Safety vent
30: CID filter
T: Notch part
40: Electrode tab
32: Gasket
60: Beading part
70: Crimping part
100: Cylindrical type secondary battery
120: Electrode assembly
130: Battery can
140: Cap assembly
150: Center pin

### BEST MODE FOR CARRYING OUT THE INVENTION

Hereinafter, embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description of the present invention will be omitted in the drawings.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

As described above, due to repeated expansion and contraction during the charging-discharging of the secondary battery, the electrode may be deformed, and the separator may be damaged to cause short-circuit between the positive electrode and the negative electrode. In a cylindrical type secondary battery, these problems may occur more frequently as a pressure is concentrated on a winding center. In particular, as a thickness difference is large in a case in which a positive electrode is a free edge positive electrode that does not include a non-coating portion, these problems may be further exacerbated.

Thus, these inventors introduced a ceramic-containing film member into an end portion, which faces the winding center, of both ends in a longitudinal direction of the positive electrode to encourage effects of preventing deformation of the electrode and reducing the thickness difference. Accordingly, it was found that the problems of the damage to the separator and the internal short-circuit that occur at the winding center of the electrode assembly could be solved.

Hereinafter, each of elements of the present invention will be described in more detail.

### [Electrode assembly]

An electrode assembly for a secondary battery according to the present invention has a shape in which an electrode stack is wound, the electrode stack including a positive electrode including a positive electrode current collector and a positive electrode active material layer disposed on at least one surface of the positive electrode current collector, a negative electrode including a negative electrode current collector and a negative electrode active material layer disposed on at least one surface of the negative electrode current collector, and a separator interposed between the positive electrode and the negative electrode. An end, which faces a winding center, of both ends in a longitudinal direction of the negative electrode is a negative electrode non-coating portion on which the negative electrode active material layer is not disposed. An end, which faces the winding center, of both ends in a longitudinal direction of the positive electrode is disposed with a ceramic-containing film member.

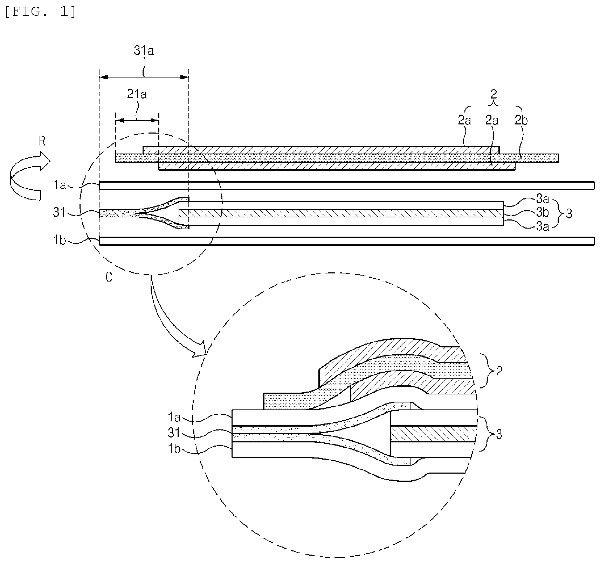

As illustrated in FIG. 1, the electrode stack may have a structure in which a separator 1b, a positive electrode 3 in which a positive electrode active material layer 3a is disposed on each of both surfaces of a positive electrode current collector 3b, a separator 1a, and a negative electrode 2 in which a negative electrode active material layer 2a is disposed on each of both surfaces of a negative electrode current collector 2b, are stacked in sequence.

The ceramic-containing film member may be disposed on an area which matches or is larger than an area of the negative electrode non-coating portion, with a separator between the ceramic-containing film member and the negative electrode non-coating portion. That is, an area 31a disposed with the ceramic-containing film member may match or be larger than an area 21a of the negative electrode non-coating portion, with the separator 1a between the area 31a and the area 21a. Referring to FIG. 1, it may be confirmed that a ceramic-containing film member 31 attached to an end of the positive electrode 3 is disposed to be wider (longer in the drawing) so as to cover the entirety of the area 21a of the negative electrode non-coating portion, which is disposed on an end of the negative electrode 2 that is subject to be a winding center C.

In addition, the ceramic-containing film member may be disposed on each of both surfaces of the positive electrode.

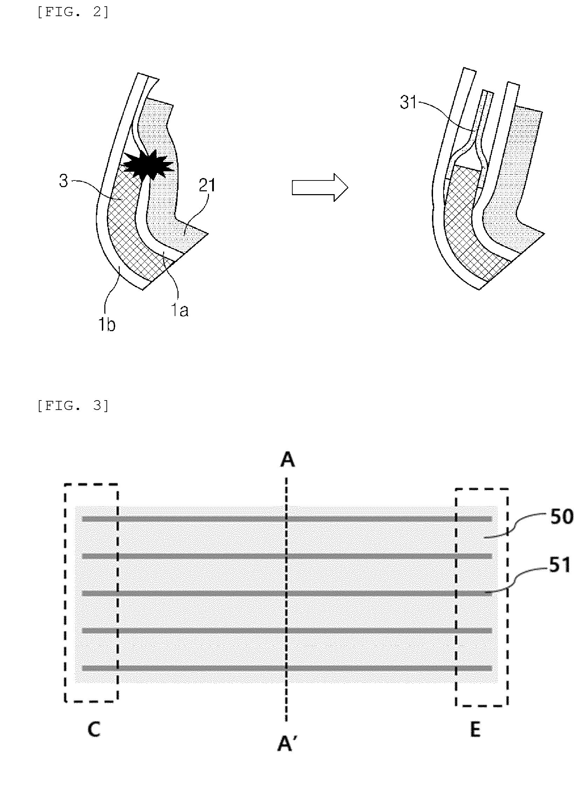

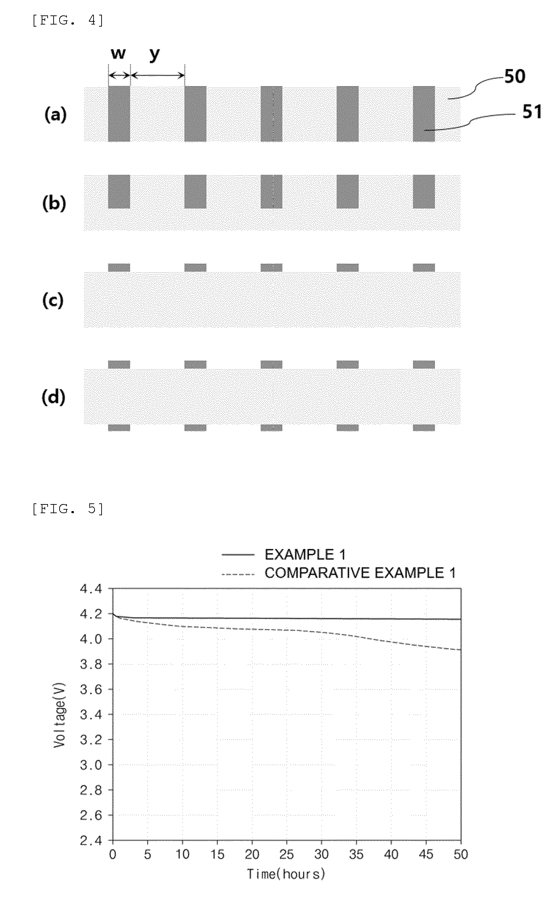

In an embodiment of the present invention, the ceramic-containing film member may be a polymer film having a melting point of 130°C or greater to which a ceramic is added, and may be, as a preferred example, a member in which ceramic 51 is contained in a striped shape at fixed intervals in a polymer film 50 as in FIG. 3. FIG. 4 is a schematic view illustrating a cross-section of a portion A-A' in FIG. 3. The cross-section may have a shape in which the polymer film and the ceramic are attached alternately as in (a), a shape in which a portion of the polymer film is replaced by the ceramic 51 as in (b), or a shape in which the ceramic 51 is attached or coated onto a single surface or each of both surfaces of the polymer film 50 as in (c) and (d).

Due to high-strength characteristics of the ceramic, the film into which the ceramic is introduced as above may have high physical rigidity and fixing force compared to a polymer film according to the related art. Accordingly, a change in length of the electrode according to the charging-discharging may be more effectively suppressed, and thus the damage to the separator due to the deformation of the electrode may be prevented. Specifically, the ceramic-containing film member may have a tensile strength of 200 N/cm to 400 N/cm, preferably 250 N/cm to 350 N/cm, or more preferably 280 N/cm to 320 N/cm.

In an embodiment of the present invention, the ceramic-containing film member is a member in which the ceramic is contained in a striped shape at fixed intervals in the polymer film, and one stripe of the ceramic may have a width (w in FIG. 4) of 1 mm to 3 mm, and a distance (y in FIG. 4) between the stripes may be 7 mm to 10 mm.

In a surface, which is in contact with the separator, of both surfaces of the ceramic-containing film member, a surface area in which the ceramic is exposed may be 5% or greater of an entire surface area of the ceramic-containing film member, and preferably 10% or less in light of flexibility when winding. The ceramic-containing film member may have a thickness of 20 µm or greater, but 170 µm or less, preferably 150 µm or less, or more preferably 50 µm or less. When the thickness of the ceramic-containing film member is in the range above, energy density may not be reduced, and also effects of the present invention may be achieved.

In addition, the polymer may include one or more selected from the group consisting of polyimide, polypropylene, polyethylene terephthalate, polystyrene, polycarbonate, and polysulfone, or preferably one or more selected from the group consisting of polyimide, polypropylene, and polyethylene terephthalate. In light of chemical resistance, the polymer may be most preferably polypropylene. Specifically, the ceramic-containing film member may be a member in which ceramic is introduced into a polymer tape in a striped shape as described above.

In addition, the ceramic may include one or more selected from the group consisting of glass fiber, tungsten carbide (WC), Al₂O₃, Cr₂O₃, SiO₂, MnO, ZnO, SnO, PbO, TiO₂, B₄C, TiC, SiC, AlN, Si₃N₄, MgB₂, TiB₂, TiAl, NiTi, and Al₂Si₂O₅(OH)₄. In light of electrical stability and strength, the ceramic may include preferably one or more selected from the group consisting of glass fiber, Al₂O₃, and SiC, and most preferably glass fiber.

The positive electrode, the negative electrode, and the separator may not be limited as long as being used typically for the secondary battery. As preferred examples, reference may be made to the following descriptions.

The positive electrode 3 may be a sheet-type positive electrode, and include the positive electrode current collector 3b made of a thin metal film having excellent conductivity, for example, an aluminum foil, and the positive electrode active material layer 3a with which each of both surfaces of the positive electrode current collector 3b is coated. The negative electrode 2 may be a sheet-type negative electrode, and include the negative electrode current collector 2b made of a thin metal film having excellent conductivity, for example, a copper (Cu) or nickel (Ni) foil, and the negative electrode active material layer 2a with which each of both surfaces of the negative electrode current collector 2b is coated.

The positive electrode active material layer may include, as a positive electrode active material, a lithium metal oxide or the like including lithium and a transition metal such as cobalt, manganese, and/or nickel, and may further include a conductive material and/or a binder when necessary. Various materials typically used in the manufacture of the secondary battery may be used for the positive electrode active material, the conductive material, and the binder, and are not limited.

In the end, which faces the winding center, of both the ends in the longitudinal direction of the positive electrode, an end of the positive electrode active material layer may match an end of the positive electrode current collector. That is, the positive electrode non-coating portion may not be disposed on the end, which faces the winding center, of both the ends in the longitudinal direction, and more specifically, the positive electrode may be a free edge positive electrode in which each of both ends in the longitudinal direction does not include the positive electrode non-coating portion. Here, the positive electrode non-coating portion means an area, which is not disposed with the positive electrode active material layer, of the positive electrode.

When the positive electrode includes the positive electrode non-coating portion, active material slurry scattered when the positive electrode active material layer is formed may be attached to the non-coating portion, and the positive electrode active material layer may be disposed in an island shape. This may cause internal short-circuit when the electrode stack is expanded and contracted during the charging-discharging of the battery.

In order to prevent the internal short-circuit, the free edge positive electrode may be introduced. However, as described above, when the electrode stack including the free edge positive electrode is wound, the problems of the damage to the separator and the internal short-circuit, which occur at the winding center, may more easily occur due to the thickness difference.

Thus, in this free edge positive electrode, a need to introduce the ceramic-containing film member according to the present invention may be increased, and the effects resulting from applying the ceramic-containing film member may be further maximized.

The negative electrode active material layer may include a negative electrode active material including carbonaceous materials such as natural graphite and artificial graphite, metals or alloys including the metals, oxides of the metals, composites of the metals and carbon, and the like, and may further include a conductive material and/or a binder when necessary. Various materials typically used in the manufacture of the secondary battery may be used for the negative electrode active material, the conductive material, and the binder, and are not limited.

As the separators 1a and 1b included in the electrode stack, a polyolefin-based porous polymer film that is a typical porous polymer film used as a separator according to the related art, for example, ethylene homopolymer, propylene homopolymer, copolymer of ethylene and butene, copolymer of ethylene and hexene, and copolymer of ethylene and methacrylate, may be used alone or in stack. In addition, a polyolefin-based porous polymer film or typical porous non-woven fabric that is coated with inorganic particles (e.g., Al₂O₃), for example, a non-woven fabric made of glass fiber, polyethylene terephthalate fiber, or the like each having a high melting point, may be used. However, the present invention is not limited thereto.

As illustrated in FIG. 1, the electrode assembly according to an embodiment of the present invention may be provided by winding the electrode stack in a direction R, and a portion C may be the winding center after the winding. The electrode assembly wound as above may be, for example, a jelly-roll type.

FIG. 2 illustrates the winding center of the electrode assembly. In the left drawing, the ceramic-containing film member is not disposed on an end of the positive electrode 3 according to the related art. In this case, when deformation of the negative electrode non-coating portion 21 occurs due to stress applied to the electrode during the charging-discharging, the separator 1a may be damaged to lead to a risk of occurrence of the short-circuit between the positive electrode 3 and the negative electrode non-coating portion 21.

As in the right drawing, when the ceramic-containing film member 31 is attached to an end of the positive electrode 3, there is an effect that the positive electrode 3 is fixed. Accordingly, the stress applied to the electrode during the charging-discharging may be withstood, and the deformation of the negative electrode non-coating portion 21 may be prevented.

The ceramic-containing film member may be a member in which ceramic is introduced in a striped shape parallel to a winding direction of the electrode stack. Referring to FIG. 3, the ceramic-containing film member may be disposed so that the portion C is positioned at the winding center, and a portion E is positioned at a winding distal end. This case is advantageous for having force to withstand the stress applied in the winding direction.

### [Cylindrical type secondary battery]

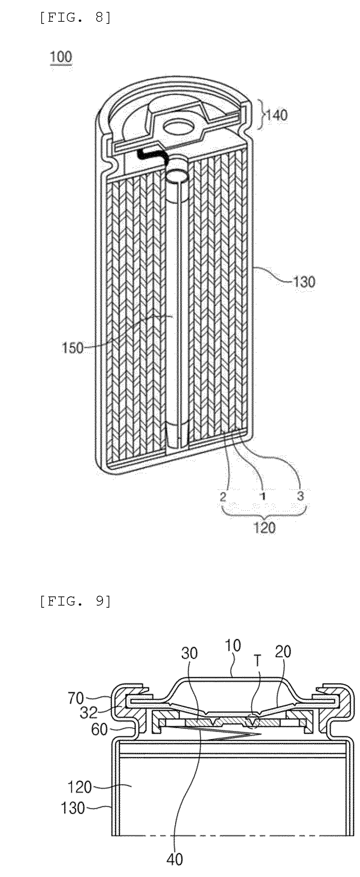

A cylindrical type secondary battery according to the present invention includes the electrode assembly, a battery can in which the electrode assembly is accommodated, and a cap assembly that seals an opened end of the battery can. Specifically, the cylindrical type secondary battery may be a cylindrical type secondary battery 100 as in FIG. 8, and may be manufactured by accommodating a jelly-roll-type electrode assembly 120 in a battery can 130, injecting an electrolyte into the battery can 130, and then mounting a cap assembly 140 on an opened top surface of the battery can 130 to seal the opened top surface. Here, the cap assembly 140 is electrically connected to the electrode assembly through an electrode tab (e.g., positive electrode tab) extending from the electrode assembly 120.

As described above, the electrode assembly 120 has a structure in which a positive electrode 3 and a negative electrode 2 are wound in a round shape with a separator 1 interposed therebetween, and a center pin 150 having a circular shape is inserted into a core of the electrode assembly 120 (center of the jelly-roll). In general, the center pin 150 is made of a metal material in order to impart predetermined strength, and has a hollow circular structure in which a sheet material is circularly bent. This center pin 150 functions to fix and support the electrode assembly, and functions as a passage for emitting gas generated due to an internal reaction upon charging/discharging and operation.

Referring to FIG. 9 illustrating a typical structure of the cap assembly 140, a top cap 10 provides a positive electrode terminal having a protruding shape and is perforated with a vent hole (not shown), and a safety vent 20 is disposed in a lower portion of the top cap. A portion of a top surface of a CID filter 30 is coupled to the safety vent 20, and a portion of a bottom surface thereof is connected to the electrode of the electrode assembly 120. When gas is generated from the electrode assembly 120 due to causes such as overcharge or high temperature to increase an internal pressure, the safety vent 20 protrudes upward while a shape thereof is inverted, so that the gas is exhausted. Here, while the CID filter 30 also moves upward, an area of a notch part T may be broken to interrupt a flow of current. Accordingly, additional overcharging and explosion of the battery may be prevented.

In addition, the cap assembly may include a gasket 32 that provides airtightness between the top cap 10 and the battery can 130 and has insulating properties. The top cap 10 may be pressed on a beading part 60 provided in the battery can 130, and be fixed by a crimping part 70. The top cap 10 is a component made of a metal material having conductivity, and covers an upper opening portion of the battery can 130. The top cap 10 is electrically connected to the positive electrode of the electrode assembly 120, and is electrically insulated from the battery can 130 through the gasket 32. Thus, the top cap 10 may function as a positive electrode terminal of the cylindrical type secondary battery. The top cap 10 may include a protrusion protruding upward from a central portion thereof, and allow the protrusion to be in contact with an external power source so that current is applied from the external power source.

The electrolyte may not be limited as long as lithium ions generated by an electrochemical reaction in the electrode upon the charging-discharging are movable in the electrolyte. For example, the electrolyte may be a non-aqueous organic solvent in which a lithium salt is dissolved.

The lithium salt may not be limited as long as being a compound capable of providing lithium ions used for a lithium secondary battery. Specifically, LiPF₆, LiClO₄, LiAsF₆, LiBF₄, LiSbF₆, LiAlO₂, LiAlCl₄, LiCF₃SO₃, LiC₄F₉SO₃, LiN (C₂F₅SO₃) ₂, LiN(C₂F₅SO₂)₂, LiN(CF₃SO₂)₂, LiCl, LiI, LiB(C₂O₄)₂, or the like may be used as the lithium salt. The lithium salt may have a concentration that is changed as appropriate in a typically available range, but may be used in a concentration range of 0.1 M to 5.0 M, preferably 0.1 M to 3.0 M.

The non-aqueous organic solvent may not be particularly limited as long as being capable of serving as a medium in which ions involved in the electrochemical reaction of the battery are movable. For example, a cyclic carbonate-based solvent such as ethylene carbonate (EC), propylene carbonate (PC), vinylene carbonate, a chain carbonate-based solvent such as dimethyl carbonate (DMC), diethyl carbonate (DEC), dipropyl carbonate, ethyl methyl carbonate (EMC), or a mixed organic solvent thereof may be used.

The cylindrical type secondary battery may be applied to various devices. For example, the cylindrical type secondary battery may be applied to the field of electric vehicles such as e-bikes, electric vehicles, or hybrid electric vehicles (HEV).

Accordingly, a battery module including the cylindrical type secondary battery as a unit cell, and a battery pack including the battery module are provided according to another embodiment of the present invention.

The battery module or battery pack may be used as a power source of one or more medium to large-sized devices of power tools, electric transport means including electric vehicles (EV), hybrid electric vehicles, and plug-in hybrid electric vehicles (PHEV), or systems for storing energy.

Hereinafter, the present invention will be described in more detail with a specific embodiment.

### MODE FOR CARRYING OUT THE INVENTION

### <Example: Manufacture of cylindrical type secondary battery>

### Example 1.

A lithium nickel-cobalt-manganese-based oxide with a composition of Li[Ni_{0.60}Co_{0.20}Mn_{0.20}]O₂, a carbon black conductive material, and a PVDF binder were mixed in a weight ratio of 95:2:3 in N-methylpyrrolidone to prepare positive electrode slurry. The positive electrode slurry was applied and dried on one surface of an aluminum collector, and then a roll press process was performed to manufacture a positive electrode.

Graphite, an SBR-CMC binder, and a carbon black conductive material were added in a weight ratio of 95:3.5:1.5 to water, which is a solvent, to prepare negative electrode slurry. The negative electrode slurry was applied and dried on a thin copper foil that is a negative collector, and then a roll press process was performed to manufacture a negative electrode.

Thereafter, in the structure as in FIG. 1, a ceramic filament tape (3M Scotch Filament Tape 8915) in which a glass fiber is contained in a polypropylene fabric was attached to an end of the positive electrode that is subject to be a winding center. Here, an area to which the ceramic filament tape 31 is attached was provided to cover the entirety of an area corresponding to the negative electrode non-coating portion 21 disposed at the winding center.

Then, a polyethylene separator 1b, the positive electrode 3 to which the ceramic filament tape 31 is attached, a polyethylene separator 1a, and the negative electrode 2, each of which has a sheet shape, were stacked in sequence, and then wound together in the direction R to manufacture an electrode assembly having a jelly-roll shape.

The manufactured electrode assembly was disposed inside the battery case. Then, an electrolyte was injected into the case, and an upper portion of the case was sealed using the cap assembly to manufacture a cylindrical type secondary battery. The electrolyte was prepared by dissolving LiPF₆ at a concentration of 1 M in a mixed organic solvent in which ethylene carbonate and ethyl methyl carbonate were mixed in a volume ratio of 3:7.

### Comparative Example 1.

A cylindrical type secondary battery was manufactured in the same process as Example 1 except that the ceramic filament tape was not attached to the end of the positive electrode in Example 1.

### <Experimental Example: Cylindrical type secondary battery performance evaluation>

Constant current charging was performed at current of 0.3 C at 25°C on the cylindrical type secondary batteries manufactured according to Example and Comparative Example until each of the cylindrical type secondary batteries reached 4.2 V. FIG. 5 shows the results obtained by measuring voltage variations over time for a pause period of about 50 hours for the completely charged cells.

Through the results in FIG. 5, it is confirmed that a case in which the ceramic filament tape is attached to the end of the positive electrode according to an embodiment of the present invention exhibits a high voltage holding ratio compared to a case in which the ceramic filament tape is not attached to the end of the positive electrode. In summary, Comparative Example 1 exhibits separator damage, while Example 1, with its ceramic-containing film member, is predicted to have prevented such damage.

## Claims

1. An electrode assembly for a secondary battery, the electrode assembly having a shape in which an electrode stack, which comprises: a positive electrode comprising a positive electrode collector and a positive electrode active material layer disposed on at least one surface of the positive electrode collector; a negative electrode comprising a negative electrode collector and a negative electrode active material layer disposed on at least one surface of the negative electrode collector; and a separator interposed between the positive electrode and the negative electrode, is wound,
wherein an end, which faces a winding center, of both ends in a longitudinal direction of the negative electrode is a negative electrode non-coating portion on which the negative electrode active material layer is not disposed, and
an end, which faces the winding center, of both ends in a longitudinal direction of the positive electrode is disposed with a ceramic-containing film member.

2. The electrode assembly of claim 1, wherein the ceramic-containing film member is disposed on an area, which matches or is larger than an area of the negative electrode non-coating portion, with the separator between the ceramic-containing film member and the negative electrode non-coating portion.

3. The electrode assembly of claim 1, wherein the ceramic-containing film member is disposed on each of both surfaces of the positive electrode.

4. The electrode assembly of claim 1, wherein, in the end, which faces the winding center, of both the ends in the longitudinal direction of the positive electrode, an end of the positive electrode active material layer matches an end of the positive electrode current collector.

5. The electrode assembly of claim 1, wherein the ceramic-containing film member has a tensile strength of 200 N/cm to 400 N/cm.

6. The electrode assembly of claim 1, wherein the ceramic-containing film member is a polymer film having a melting point of 130°C or greater to which a ceramic is added.

7. The electrode assembly of claim 6, wherein, in a surface, which is in contact with the separator, of both surfaces of the ceramic-containing film member, a surface area in which the ceramic is exposed is 5% or greater of an entire surface area of the ceramic-containing film member.

8. The electrode assembly of claim 6, wherein the polymer comprises one or more selected from the group consisting of polyimide, polypropylene, polyethylene terephthalate, polystyrene, polycarbonate, and polysulfone.

9. The electrode assembly of claim 6, wherein the ceramic comprises one or more selected from the group consisting of glass fiber, tungsten carbide, Al₂O₃, Cr₂O₃, SiO₂, MnO, ZnO, SnO, PbO, TiO₂, B₄C, TiC, SiC, AlN, Si₃N₄, MgB₂, TiB₂, TiAl, NiTi, and Al₂Si₂O₅(OH)₄.

10. The electrode assembly of claim 1, wherein ceramic is introduced into the ceramic-containing film member in a striped shape parallel to a winding direction of the electrode stack.

11. A cylindrical type secondary battery comprising:
the electrode assembly for the secondary battery of claim 1;
a battery can in which the electrode assembly is accommodated; and
a cap assembly sealing an opened end of the battery can.
